# EUROPEAN PATENT SPECIFICATION

(11) **EP 0 436 286 B1**
(45) Date of publication and mention of the grant of the patent: **05.02.1997**
(21) Application number: 90312302.4
(22) Date of filing: 09.11.1990
(51) Int. Cl.: G01N 22/04, G01N 22/00

(54) **Means and method for analyzing a petroleum stream**
Mittel und Verfahren zur Analyse eines Ölstroms
Moyens et méthode pour l'analyse d'un flux de pétrole

(30) Priority: 02.01.1990 US 459618; 02.01.1990 US 459615
(43) Date of publication of application: 10.07.1991
(73) Proprietor: TEXACO DEVELOPMENT CORPORATION, White Plains, New York 10650 (US)
(72) Inventor: Marrelli, John David, Houston, Texas 77009 (US); Durrett, Michael Gregory, Houston, Texas 77080 (US); Helms, David Albert, Houston, Texas 77096 (US); Pepin, Lisa Langford, Sugarland, Texas 77479 (US); Hatton, Gregory John, Houston, Texas 77035 (US)
(74) Representative: Wood, Anthony Charles

(56) References cited:
- EP-A- 0 268 399
- EP-A- 0 372 843
- US-A- 4 499 418
- US-A- 4 727 311
- US-A- 4 764 718
- US-A- 4 812 739

## Description

The present invention relates to analyzers and analyzing methods in general and, more particularly, to petroleum stream analyzers and analyzing methods.

US-A-4764718 describes apparatus for obtaining a measure of the relative contents of a petroleum stream containing oil and water, said apparatus comprising:
transmitter means for transmitting microwave energy into the petroleum stream;
receiver means for receiving microwave energy transmitted through the petroleum stream;
detector means operable to provide signals representative respectively of the intensity of the microwave energy transmitted by said transmitter means and the intensity of the microwave energy received by said receiver means to permit determination of the attenuation;
phase means operable to provide a signal representative of the phase difference between the transmitted and the received microwave energy;
storage means for storing predetermined values of said attenuation and said phase difference representative of the stream containing predetermined percentages of oil and of water; and
deriving means responsive to the signals provided by said detector means and by said phase means and said stored predetermined values to derive a signal representative of the oil/water ratio.

The present invention is characterized in that:
said apparatus is adapted to obtain a measure of the relative contents of a petroleum stream containing oil and water together with a third fluid which is either gas or surfactant;
said storage means storing first and second maps each generated by utilizing reference points representative of said predetermined values of attenuation and phase difference respectively at 100% oil, 100% water and 100% of said third fluid, deriving a line connecting the reference points for 100% water and 100% of said third fluid, deriving a line connecting the reference points for 100% oil and 100% water, and deriving a line connecting the reference points for 100% oil and 100% of said third fluid, said first map being for water-continuous fluid mixtures and said second map being for oil-continuous mixtures; and
said deriving means being operable to determine a measurement point within the appropriate one of said maps in response to said signals representative of the attenuation and the phase difference, and generating said signal representative of the oil/water ratio in accordance with the relationship of said measurement point to the map.

The present invention also provides a method as set out in Claim 5.

The third fluid may be gas in a petroleum stream produced from a borehole, or may be a surfactant in a petroleum stream produced from a borehole by an enhanced oil recovery method utilizing the injection of a surfactant into a producing earth formation to drive the formation oil towards a producing well.

Embodiments of the invention will now be described, by way of example, with reference to the accompanying drawings, in which:

Figure 1 is a simplified block diagram of a petroleum stream analyzer constructed in accordance with the present invention.

Figure 2A is a graphical representation of a map utilized in practicing the present invention for a petroleum stream which is in a water-continuous phase.

Figure 2B is a graphical representation of a map for a petroleum stream which is in an oil-continuous phase.

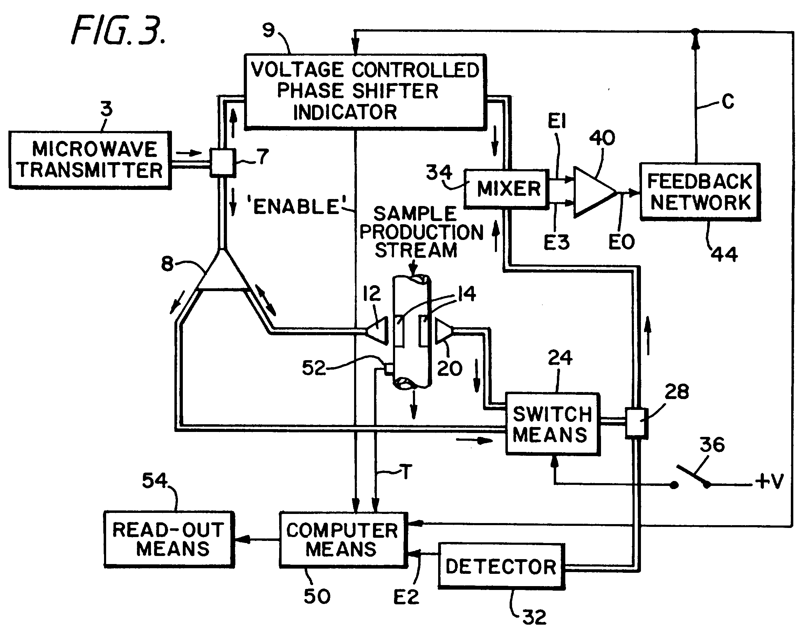

Figure 3 is a simplified block diagram of a petroleum stream analyzing system constructed in accordance with another embodiment of the present invention.

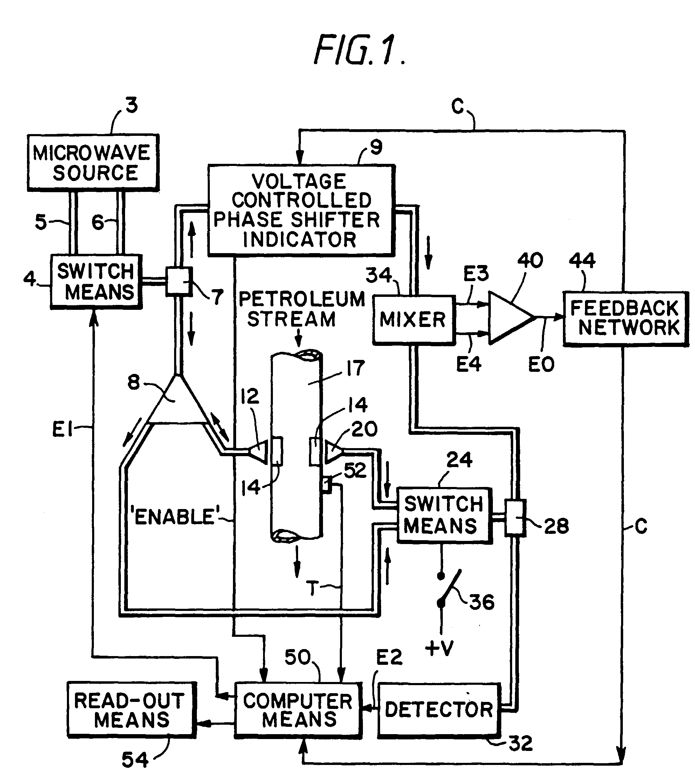

The analyzer shown in Figure 1 includes a microwave source 3 providing electromagnetic energies, hereinafter referred to as microwave energy, at two microwave frequencies. Preferred frequencies of 10.119 GHz and 10.369 GHz are used, although the true criteria is that there be a substantial difference between the two frequencies. Source 3 is low powered and may use a microwave gun source. Source 3 provides the microwave energies to switch means 4 via microwave conductors 5 and 6. Switch means 4 is controlled by a signal E1 to pass the microwave energy from either conductor 5 or 6 and provide it to a directional coupler 7. Directional coupler 7 provides the selected microwave energy to a circulator 8 and to a conventional type voltage controlled phase shifter 9. All conductance or carrying of microwave energy is accomplished by using conventional type waveguides.

Circulator 8 provides microwave energy to an antenna 12. Antenna 12 provides the microwave energy through a window 14, which may be made of a low dielectric material such as ceramic or Teflon, to a petroleum stream having at least oil and water, passing through a pipe 17. Pipe 17 may be a portion of a pipeline having windows 14 or it may be made of the "window" material. The microwave energy provided by antenna 12 passes through the petroleum stream and another window 14 and is received by an antenna 20. Antenna 20 provides the received microwave energy to a switch means 24 which in turn provides the received microwave as test microwave energy to a directional coupler 28, as hereinafter explained. Directional coupler 28 provides the test microwave energy to a detector 32 and to a mixer 34. Detector 32 provides a signal E2 corresponding to the intensity of the microwave energy received by antenna 20.

The petroleum stream also reflects some of the microwave energy back to antenna 12 which passes back through antenna 12 to circulator 8. Circulator 8 blocks the reflected microwave energy from feeding back to source 3 and provides the reflected microwave energy to switch means 24. Reflected microwave energy becomes more important as the distance between antennas 12 and 20 increases. This is especially true where a large pipeline carrying the petroleum stream is being monitored.

A positive direct current voltage +V is provided to a switch 36 which is connected to switch means 24. With switch 36 open, switch means 24 provides microwave energy from antenna 20 as test microwave energy. When switch 36 is closed, the reflected microwave energy from circulator 8 is provided by switch means 24 as the test microwave energy.

The microwave energy from voltage controlled phase shifter 9, hereinafter called the reference microwave energy, and the test microwave energy from directional coupler 28, are provided to mixer 34 which mixes them to provide two electrical signals E3, E4, representative of the phases of the reference microwave energy and the test microwave energy, respectively.

A differential amplifier 40 provides an output signal E0 in accordance with the difference between signals E3 and E4. Signal E0 is a function of the phase difference between the reference microwave energy and the test microwave energy and is provided to a feedback network 44. Feedback network 44 provides a signal C to voltage control phase shifter 5, controlling the phase of the reference microwave energy, and to a mini-computer means 50. Signal E0, and hence the signal C, decreases in amplitude until there is substantially 90° phase difference between the reference microwave energy and the test microwave energy. Voltage control phase shifter 5 indicates the amount of phase shift required to eliminate the phase difference.

Signal E2 from detector 32 is also provided to computer means 50. It has been discovered that the phase difference for measurements in a fluid stream may exceed 360 degrees under certain circumstances. These circumstances include cases where the dielectric constant of the stream is large, for example when the percentage of water in the petroleum is large, and when the emulsion is water continuous and in cases where the distance between antennas is large as in the case of using larger pipe 17 of Figure 1.

In those cases the true phase shift may be the measured phase shift plus some integer multiple of 360 degrees. The present invention resolves this ambiguity by monitoring the petroleum at two substantially different frequencies, the main frequency f₁, and a secondary frequency, f₂, and using the difference in measured phase shift, (phase 1 - phase 2) at the two frequencies to determine the correct integer multiplier to use when computing the true phase shift. The correct integer is chosen from a table created from knowledge of the frequencies involved. The maximum possible size of the integer that may be resolved is limited by the separation of frequencies f₁ and f₂. In the present case integer size of up to 40 can be resolved. Reduction of frequency separation would increase the maximum integer size further limited only by resolution of the phase shift measurement.

A temperature sensor 52 sensing the temperature of the petroleum stream in pipe 17 and provides a signal T to computer means 50 representative of the sensed temperature.

Phase Shifter 9 also provides an enable signal to computer means 50 allowing computer means 50 to utilize signals T, C and E2. Computer means 50 also provides signal E1 to switch means 4 so that computer means 50 can correlate signal E2 to a particular frequency.

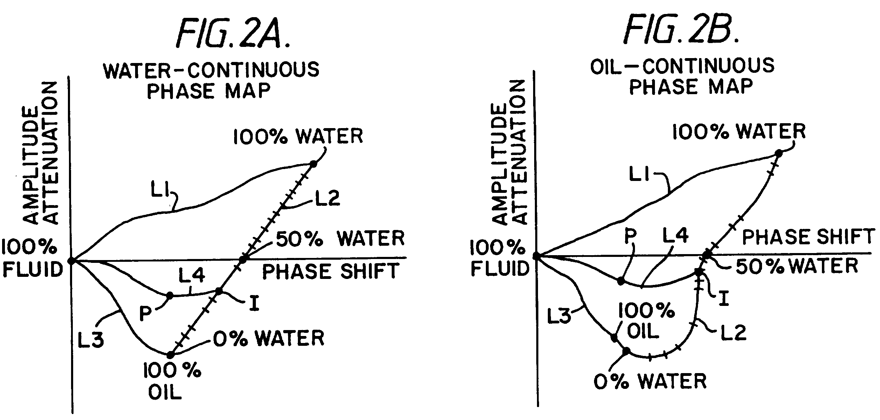

Figure 2A is a "map" of a water-continuous phase petroleum stream with 100% fluid, 100% water and 100% oil points shown as fluid, water and oil, respectively. The fluid is either gas or surfactant, and is referred to hereinafter as fluid for convenience of description. Figure 2B is a "map" of an oil-continuous phase petroleum stream. The maps of Figures 2A and 2B were developed from empirical data utilizing the following equations:
1. y(Li) = f(x), where f(x) denotes y is a function of X, L1 is a line connecting 100% fluid to 100% water.
2. y(L2) = g(X), where g(X) denotes y as another function of X and L2 is a line connecting 100% oil to 100% water.
3. y(L3) = h(X), where h(X) denotes y as yet another function of X and L3 is a line connecting 100% fluid to 100% oil.

In general, the maps depicted in Figures 2A and 2B are utilized by computer means 50 as follows. The amplitude attenuation and phase shift measurements of the microwave energies in pipe 17 are shown in Figures 2A and 2B as point P. The procedure is the same, whether the petroleum stream is water-continuous or it is oil-continuous. A line L4 of functional form identical to line L3 is projected by computer means 50 through the 100% fluid point through point P to intercept line L2, which is in essence a water-oil line connecting the 100% water point and the 100% oil point, at point I. Point I yields the water cut of the petroleum stream. Further, the fluid to liquid ratio may also be determined as the ratio of the distance from point P to point I along line L4 divided by the distance from the 100% fluid point to point I along line L4. If there is no fluid present in the petroleum stream, point P would lie on line L3 and the fluid to liquid ratio would be zero.

Although the foregoing has been discussed as being a water cut and a fluid (i.e. gas or surfactant) to liquid fraction measurement, the maps may also yield other ratios. Computer means 50 may generate lines from the 100% water point to intercept line L3. Again, that ratio would be determined in the same manner as previously discussed for the fluid to liquid ratio. Computer means 50 may also generate a line from the 100% oil point through point P and intercept line L1.

## Claims

1. Apparatus for obtaining a measure of the relative contents of a petroleum stream containing oil and water, said apparatus comprising:
transmitter means (3,12) for transmitting microwave energy into the petroleum stream;
receiver means (20) for receiving microwave energy transmitted through the petroleum stream;
detector means (32) operable to provide signals representative respectively of the intensity of the microwave energy transmitted by said transmitter means and the intensity of the microwave energy received by said receiver means to permit determination of the attenuation;
phase means (34,40,44,9) operable to provide a signal representative of the phase difference between the transmitted and the received microwave energy;
storage means (50,MAP) for storing predetermined values of said attenuation and said phase difference representative of the stream containing predetermined percentages of oil and of water; and
deriving means (50,54) responsive to the signals provided by said detector means and by said phase means and said stored predetermined values to derive a signal representative of the oil/water ratio;
characterized in that:
said apparatus is adapted to obtain a measure of the relative contents of a petroleum stream containing oil and water together with a third fluid which is either gas or surfactant;
said storage means storing first and second maps each generated by utilizing reference points representative of said predetermined values of attenuation and phase difference respectively at 100% oil, 100% water and 100% of said third fluid, deriving a line (L1) connecting the reference points for 100% water and 100% of said third fluid, deriving a line (L2) connecting the reference points for 100% oil and 100% water, and deriving a line (L3) connecting the reference points for 100% oil and 100% of said third fluid, said first map being for water-continuous fluid mixtures and said second map being for oil-continuous mixtures; and
said deriving means (50,54) being operable to determine a measurement point (P) within the appropriate one of said maps in response to said signals representative of the attenuation and the phase difference, and generating said signal representative of the oil/water ratio in accordance with the relationship of said measurement point (P) to the map.

2. Apparatus according to Claim 1 characterized in that said transmitter means is operable to transmit microwave energy at first and second different frequencies at different times in a measurement cycle.

3. Apparatus according to Claim 1 or Claim 2 characterized in that said third fluid is gas in a petroleum stream produced from a borehole.

4. Apparatus according to Claim 1 or Claim 2 characterized in that said third fluid is surfactant in a petroleum stream produced from a borehole by an enhanced oil recovery method utilizing the injection of a surfactant into a producing earth formation.

5. A method of obtaining a measure of the relative contents of a petroleum stream containing oil and water, said method comprising:
transmitting microwave energy into the petroleum stream;
receiving microwave energy transmitted through the petroleum stream;
providing signals representative respectively of the intensity of the transmitted microwave energy and the intensity of the received microwave energy to permit determination of the attenuation;
providing a signal representative of the phase difference between the transmitted and the received microwave energy;
storing predetermined values of said attenuation and said phase difference representative of the stream containing predetermined percentages of oil and of water; and
deriving in response to the signals representative of the intensities and of the phase difference and said stored predetermined values, a signal representative of the oil/water ratio;
characterized in that:
said method is adapted to obtain a measure of the relative contents of a petroleum stream containing oil and water together with a third fluid which is either gas or surfactant;
said storing step stores first and second maps each generated by utilizing reference points representative of said predetermined values of attenuation and phase difference respectively at 100% oil, 100% water and 100% of said third fluid, deriving a line (L1) connecting the reference points for 100% water and 100% of said third fluid, deriving a line (L2) connecting the reference points for 100% oil and 100% water, and deriving a line (L3) connecting the reference points for 100% oil and 100% of said third fluid, said first map being for water-continuous fluid mixtures and said second map being for oil-continuous mixtures; and
said deriving step comprises determining a measurement point (P) within the appropriate one of said maps in response to said signals representative of the attenuation and the phase difference, and generating said signal representative of the oil/water ratio in accordance with the relationship of said measurement point (P) to the map.

6. A method according to Claim 5 characterized in that said step of deriving said signal comprises:
generating a line L4 which passes through the reference point for 100% of third fluid and the measurement point P and intercepts line L2 at a point I; and
developing a ratio from line L4 comprising the length of a first portion of line L4 from point P to point I to the length of a second portion of line L4 from the reference point for 100% of third fluid to point I.

7. A method according to Claim 5 characterized in that said step of deriving said signal comprises:
generating a line L4 which passes through the reference point for 100% water and measurement point P and intercepts line L3 at a point I; and
developing a ratio from line L4 comprising the length of a first portion of line L4 from point P to point I to the length of a second portion of line L4 from the reference point for 100% water to point I.

8. A method according to Claim 5 characterized in that said step of deriving said signal comprises:
generating a line L4 which passes through the reference point for 100% oil and measurement point P and intercepts line L1 at a point I; and
developing a ratio from line L4 comprising the length of a first portion of line L4 from the point P to point I to the length of a second portion of line L4 from the reference point for 100% oil to point I.

## Patentansprüche

1. Vorrichtung zum Erzielen einer Maßangabe für die relativen Anteile eines Öl und Wasser enthaltenden Erdölstroms, wobei die Vorrichtung umfaßt:
eine Sendeeinrichtung (3, 12) zum Senden von Mikrowellenenergie in den Erdölstrom;
eine Empfangseinrichtung (20) zum Empfangen von durch den Erdölstrom gesendeter Mikrowellenenergie;
eine Detektoreinrichtung (32), die betreibbar ist, um Signale, die jeweils für die Intensität der von der Sendeeinrichtung gesendeten Mikrowellenenergie und der Intensität der von der Empfangseinrichtung empfangenen Mikrowellenenergie repräsentativ sind, für eine Bestimmung der Dämpfung zu liefern;
eine Phaseneinrichtung (34, 40, 44, 9), die betreibbar ist, um ein Signal, das für die Phasendifferenz zwischen der gesendeten und der empfangenen Mikrowellenenergie repräsentativ ist, zu liefern;
eine Speichereinrichtung (50, MAP) zum Speichern von vorab bestimmten Dämpfungs- und Phasendifferenzwerten, die für den vorab bestimmte Prozentsätze von Öl und Wasser enthaltenden Strom repräsentativ sind; und
eine Ableiteinrichtung (50, 54), die auf die von der Detektoreinrichtung und der Phaseneinrichtung gelieferten Signale und die gespeicherten vorab bestimmten Werte anspricht, um ein für das Öl/Wasser-Verhältnis repräsentatives Signal abzuleiten;
dadurch gekennzeichnet, daß:
die Vorrichtung geeignet ist, eine Maßangabe für die relativen Anteile eines Öl und Wasser zusammen mit einem dritten Fluid, das entweder Gas oder ein oberflächenaktives Mittel ist, enthaltenden Erdölstroms zu erzielen;
die Speichereinrichtung erste und zweite Karten speichert, wobei jede unter Verwendung von Referenzpunkten erzeugt ist, die für die vorab bestimmten Dämpfungs- und Phasendifferenzwerte jeweils bei 100 % Öl, 100 % Wasser und 100 % des dritten Fluids repräsentativ sind, eine Linie (L1) ableitet, die die Referenzpunkte für 100 % Wasser und 100 % des dritten Fluids verbindet, eine Linie (L2) ableitet, die die Referenzpunkte für 100 % Öl und 100 % Wasser verbindet, und eine Linie (L3) ableitet, die die Referenzpunkte für 100 % Öl und 100 % des dritten Fluids verbindet, wobei die erste Karte für wasserkontinuierliche Fluid-Gemische und die zweite Karte für ölkontinuierliche Gemische ist; und
die Ableiteinrichtung (50, 54) betreibbar ist, um einen Meßpunkt (P) innerhalb der geeigneten Karte als Antwort auf die für die Dämpfung und die Phasendifferenz repräsentativen Signale zu bestimmen, und das für das Öl-Wasser-Verhältnis entsprechend der Beziehung des Meßpunktes (P) zu der Karte repräsentative Signal erzeugt.

2. Vorrichtung nach Anspruch 1, dadurch gekennzeichnet, daß die Sendeeinrichtung betreibbar ist, um Mikrowellenenergie mit einer ersten und einer zweiten verschiedenen Frequenz zu verschiedenen Zeiten in einem Meßzyklus zu senden.

3. Vorrichtung nach Anspruch 1 oder 2, dadurch gekennzeichnet, daß das dritte Fluid ein Gas in einem von einem Bohrloch erzeugten Erdölstrom ist.

4. Vorrichtung nach Anspruch 1 oder 2, dadurch gekennzeichnet, daß das dritte Fluid ein oberflächenaktives Mittel in einem Erdölstrom ist, der durch ein verbessertes Ölrückgewinnungsverfahren unter Verwendung des Einspritzens eines oberflächenaktiven Mittels in eine ölführende Erdformation von einem Bohrloch erzeugt ist.

5. Ein Verfahren zum Erzielen einer Maßangabe für die relativen Anteile eines Öl und Wasser enthaltenden Erdölstroms, wobei das Verfahren umfaßt:
Senden von Mikrowellenenergie in den Erdölstrom;
Emfangen von durch den Erdölstrom gesendeter Mikrowellenenergie;
Bereitstellen von Signalen, die jeweils für die Intensität der gesendeten Mikrowellenenergie und die Intensität der empfangenen Mikrowellenenergie repräsentativ sind, für eine Bestimmung der Dämpfung;
Bereitstellen eines Signals, das für die Phasendifferenz zwischen der gesendeten und der empfangenen Mikrowellenenergie repräsentativ ist;
Speichern vorab bestimmter Dämpfungs- und Phasendifferenzwerte, die für den vorab bestimmte Prozentsätze von Öl und Wasser enthaltenden Strom repräsentativ sind; und
Ableiten eines für das Öl-Wasser-Verhältnis repräsentativen Signals als Antwort auf die für die Intensitäten und die Phasendifferenz und die gespeicherten vorab bestimmten Werte repräsentativen Signale;
dadurch gekennzeichnet, daß:
das Verfahren geeignet ist, um eine Maßangabe für die relativen Anteile eines Öl und Wasser zusammen mit einem dritten Fluid, das entweder Gas oder ein oberflächenaktives Mittel ist, enthaltenden Erölstroms zu erzielen;
wobei der Speicherschritt erste und zweite Karten speichert, wobei jede durch Verwendung von Referenzpunkten erzeugt ist, die für die vorab bestimmten Dämpfungs- und Phasendifferenzwerte jeweils bei 100 % Öl, 100 % Wasser und 100 % des dritten Fluids repräsentativ sind, eine Linie (L1) ableitet, die die Referenzpunkte für 100 % Wasser und 100 % des dritten Fluids verbindet, eine Linie (L2) ableitet, die die Referenzpunkte für 100 % Öl und 100 % Wasser verbindet, und eine Linie (L3) ableitet, die die Referenzpunkte für 100 % Öl und 100 % des dritten Fluids verbindet, wobei die erste Karte für wasserkontinuierliche Fluid-Gemische und die zweite Karte für ölkontinuierliche Gemische ist; und
der Ableitschritt ein Bestimmen eines Meßpunktes (P) innerhalb der geeigneten Karte als Antwort auf die für die Dämpfung und die Phasendifferenz repräsentativen Signale und Erzeugen des für das Öl/Wasser-Verhältnis entsprechend der Beziehung des Meßpunktes (P) zu der Karte repräsentativen Signals umfaßt.

6. Ein Verfahren nach Anspruch 5, dadurch gekennzeichnet, daß der Schritt des Ableitens des Signals umfaßt:
Erzeugen einer Linie L4, die durch den Referenzpunkt für 100% des dritten Fluids und den Meßpunkt P tritt und die Linie L2 an einem Punkt I abschneidet; und
Entwickeln eines Verhältnisses anhand der Linie L4, das die Länge eines ersten Bereichs der Linie L4 von dem Punkt P zu dem Punkt I zu der Länge eines zweiten Bereichs der Linie L4 von dem Referenzpunkt für 100% des dritten Fluids zu dem Punkt I umfaßt.

7. Ein Verfahren nach Anspruch 5, dadurch gekennzeichnet, daß der Schritt des Ableitens des Signals umfaßt:
Erzeugen einer Linie L4, die durch den Referenzpunkt für 100% Wasser und den Meßpunkt P tritt und die Linie L3 an einem Punkt I abschneidet; und
Ableiten eines Verhältnisses anhand der Linie L4, das die Länge eines ersten Bereichs der Linie L4 von dem Punkt P zu dem Punkt I zu der Länge eines zweiten Bereichs der Linie L4 von dem Referenzpunkt für 100% Wasser zu dem Punkt I umfaßt.

8. Ein Verfahren nach Anspruch 5, dadurch gekennzeichnet, daß der Schritt des Ableitens des Signals umfaßt:
Erzeugen einer Linie L4, die durch den Referenzpunkt für-100% Öl und den Meßpunkt P tritt und die Linie L1 an einem Punkt I abschneidet; und
Entwickeln eines Verhältnisses anhand der Linie L4, das die Länge eines ersten Bereichs der Linie L4 von dem Punkt P zu dem Punkt I zu der Länge eines zweiten Bereichs des Linie L4 von dem Referenzpunkt für 100% Öl zu dem Punkt I umfaßt.

## Revendications

1. Appareil pour obtenir une mesure des teneurs relatives d'un flux de pétrole contenant de l'huile et de l'eau, ledit appareil comprenant :
des moyens formant transmetteurs (3, 12) pour transmettre une énergie hyperfréquence dans le flux de pétrole ;
des moyens formant récepteurs (20) pour recevoir une énergie hyperfréquence transmise par l'intermédiaire du flux de pétrole ;
des moyens formant détecteurs (32) opérant pour délivrer des signaux représentatifs respectivement de l'intensité de l'énergie hyperfréquence transmise par lesdits moyens formant transmetteurs et de l'intensité de l'énergie hyperfréquence reçue par lesdits moyens formant récepteurs, afin de permettre une détermination de l'atténuation ;
des moyens de signal de phase (34, 40, 44, 9) opérant pour délivrer un signal représentatif de la différence de phase entre l'énergie hyperfréquence transmise et l'énergie hyperfréquence reçue ;
des moyens de stockage (50) pour stocker des valeurs prédéterminées de ladite atténuation et de ladite différence de phase, représentatives du flux contenant des pourcentages prédéterminés d'huile et d'eau ; et
des moyens de calcul (50, 54), qui réagissent aux signaux délivrés par lesdits moyens formant détecteurs et par lesdits moyens de signal de phase et auxdites valeurs prédéterminées stockées, pour calculer un signal représentatif du rapport huile/eau ;
caractérisé en ce que :
ledit appareil est capable d'obtenir une mesure des teneurs relatives d'un flux de pétrole contenant de l'huile et de l'eau avec à un troisième fluide qui est soit un gaz, soit un agent tensio-actif ;
lesdits moyens de stockage stockant des première et deuxième configurations, chacune générée en utilisant des points de référence représentatifs desdites valeurs prédéterminées de l'atténuation et de la différence de phase respectivement à 100% d'huile, 100% d'eau et 100% dudit troisième fluide, calculant une ligne (L1) reliant les points de référence pour 100% d'eau et 100% dudit troisième fluide, calculant une ligne (L2) reliant les points de référence pour 100% d'huile et 100% d'eau, et calculant une ligne (L3) reliant les points de référence pour 100% d'huile et 100% dudit troisième fluide, ladite première configuration concernant des mélanges de fluides continus en eau et ladite deuxième configuration concernant des mélanges continus en huile; et
lesdits moyens de calcul (50, 54) opérant pour déterminer un point de mesure (P) à l'intérieur de la configuration appropriée desdites configurations, en réponse auxdits signaux représentatifs de l'atténuation et de la différence de phase, et générant ledit signal représentatif du rapport huile/eau conformément à la relation dudit point de mesure (P) par rapport à la configuration.

2. Appareil selon la revendication 1, caractérisé en ce que lesdits moyens formant transmetteurs opèrent de façon à transmettre une énergie hyperfréquence à des première et deuxième fréquences différentes, à des temps différents d'un cycle de mesures.

3. Appareil selon la revendication 1 ou la revendication 2, caractérisé en ce que ledit troisième fluide est un gaz d'un flux de pétrole produit depuis un trou de forage.

4. Appareil selon la revendication 1 ou la revendication 2, caractérisé en ce que ledit troisième fluide est un agent tensio-actif d'un flux de pétrole produit depuis un trou de forage selon un procédé de récupération d'huile amélioré utilisant l'injection d'un tensio-actif dans un gisement pétrolier terrestre.

5. Procédé pour obtenir une mesure des teneurs relatives d'un flux de pétrole contenant de l'huile et de l'eau, ledit procédé consistant à :
transmettre une énergie hyperfréquence dans le flux de pétrole ;
recevoir une énergie hyperfréquence transmise par l'intermédiaire du flux de pétrole ;
fournir des signaux représentatifs respectivement de l'intensité de l'énergie hyperfréquence transmise et de l'intensité de l'énergie hyperfréquence reçue, afin de permettre une détermination de l'atténuation ;
fournir un signal représentatif de la différence de phase entre l'énergie hyperfréquence transmise et l'énergie hyperfréquence reçue ;
stocker des valeurs prédéterminées de ladite atténuation et de ladite différence de phase représentatives du flux contenant des pourcentages prédéterminés d'huile et d'eau ; et
calculer, en réponse aux signaux représentatifs des intensités et de la différence de phase et auxdites valeurs prédéterminées stockées, un signal représentatif du rapport huile/eau ;
caractérisé en ce que :
ledit procédé est capable d'obtenir une mesure des teneurs relatives d'un flux de pétrole contenant de l'huile et de l'eau avec un troisième fluide qui est soit un gaz, soit un agent tensio-actif ;
ladite étape de stockage consiste à stocker des première et deuxième configurations, chacune générée en utilisant des points de référence représentatifs desdites valeurs prédéterminées de l'atténuation et de la différence de phase respectivement à 100 % d'huile, 100 % d'eau et 100 % dudit troisième fluide, calculant une ligne (L1) reliant les points de référence pour 100 % d'eau et 100 % dudit troisième fluide, calculant une ligne L2 reliant les points de référence pour 100 % d'huile et 100 % d'eau, et calculant une ligne (L3) reliant les points de référence pour 100 % d'huile et 100 % dudit troisième fluide, ladite première configuration concernant des mélanges de fluides continus en eau et ladite deuxième configuration concernant des mélanges continus en huile ; et
ladite étape de calcul consiste à déterminer un point de mesure (P) à l'intérieur de la configuration appropriée desdites configurations, en réponse auxdits signaux représentatifs de l'atténuation et de la différence de phase, et à générer ledit signal représentatif du rapport huile/eau conformément à la relation dudit point de mesure (P) par rapport à la configuration.

6. Procédé selon la revendication 5, caractérisé en ce que ladite étape de calcul dudit signal consiste à :
générer une ligne L4 qui passe par le point de référence pour 100 % du troisième fluide et le point de mesure P, et coupe la ligne L2 au point I ; et
élaborer un rapport entre la ligne L4 comprenant la longueur d'une première partie de la ligne L4 allant du point P au point I, et la longueur d'une deuxième partie de la ligne L4 allant du point de référence pour 100 % du troisième fluide au point I.

7. Procédé selon la revendication 5, caractérisé en ce que ladite étape de calcul dudit signal consiste à :
générer une ligne L4 qui passe par le point de référence pour 100 % d'eau et le point de mesure P, et coupe la ligne L3 au point I ; et
élaborer un rapport entre la ligne L4 comprenant la longueur d'une première partie de la ligne L4 allant du point P au point I, et la longueur d'une deuxième partie de la ligne L4 allant du point de référence pour 100 % d'eau au point I.

8. Procédé selon la revendication 5, caractérisé en ce que ladite étape de calcul dudit signal consiste à :
générer une ligne L4 qui passe par le point de référence pour 100 % d'huile et le point de mesure P, et coupe la ligne L1 au point I ; et
élaborer un rapport entre la ligne L4 comprenant la longueur d'une première partie de la ligne L4 allant du point P au point I, et la longueur d'une deuxième partie de la ligne L4 allant du point de référence pour 100 % d'huile au point I.
